# EUROPEAN PATENT SPECIFICATION

(11) **EP 2 820 103 B1**
(45) Date of publication and mention of the grant of the patent: **16.11.2016**
(21) Application number: 13726074.1
(22) Date of filing: 17.05.2013
(51) Int. Cl.: C09K 8/68, C09K 8/80

(54) **ENHANCING THE CONDUCTIVITY OF PROPPED FRACTURES**
VERBESSERUNG DER LEITFÄHIGKEIT VON GESTÜTZTEN BRÜCHEN
AMÉLIORATION DE LA CONDUCTIVITÉ DE FRACTURES ÉTAYÉES

(30) Priority: 22.05.2012 US 201213477658
(43) Date of publication of application: 07.01.2015
(73) Proprietor: Halliburton Energy Services, Inc., Houston, TX 77072 (US)
(72) Inventor: WEAVER, Jimmie, D., Duncan, OK 73533 (US); RICKMAN, Richard, D., Spring, TX 77379 (US); NGUYEN, Philip, D., Duncan, OK 73533 (US)
(74) Representative: Hoffmann Eitle
(86) International application number: PCT/US2013/041543
(87) International publication number: WO 2013/176977

(56) References cited:
- WO-A2-2009/079231
- WO-A2-2013/028298
- US-A1- 2005 269 101
- US-A1- 2005 274 517
- US-A1- 2009 298 720

## Description

### BACKGROUND

The present invention relates to methods for enhancing the conductivity of propped fractures in subterranean formations.

After a wellbore is drilled, it may often be necessary to fracture the subterranean formation to enhance hydrocarbon production, especially in tight formations like shales and tight-gas sands. Access to the subterranean formation can be achieved by first creating an access conduit from the wellbore to the subterranean formation. Then, a fracturing fluid, often called a pad, is introduced at pressures exceeding those required to maintain matrix flow in the formation permeability to create or enhance at least one fracture that propagates from at least one access conduit. The pad fluid is followed by a proppant slurry fluid comprising a proppant particle to prop the fracture open after pressure from the fluid is reduced. The proppant particles hold open the fractures thereby maintaining the ability for fluid to flow through the fracture and ultimately be produced at the surface. However, as proppant particles are suspended in treatment fluids, gravity can cause the proppant particles to settle and form dunes.

As used herein, "proppant particles" and "proppants" may be used interchangeable and refer to any material or formulation that can be used to hold open at least a portion of a fracture. As used herein, a "proppant pack" is the collection of proppant particles in a fracture. It should be understood that the term "particulate" or "particle," and derivatives thereof as used in this disclosure, includes all known shapes of materials, including substantially spherical materials, low to high aspect ratio materials, fibrous materials, polygonal materials (such as cubic materials), and mixtures thereof.

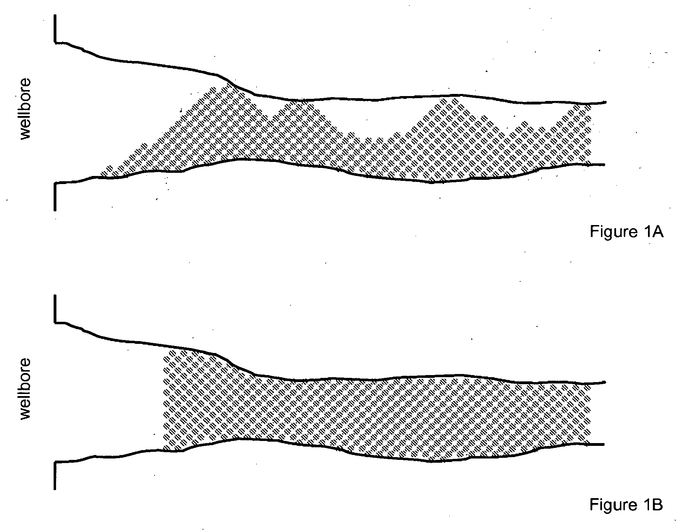

Proppant settling can be particularly prevalent in high-rate water fracturing operations and in deviated wellbores. In high-rate water fracturing, the rate of water flow helps suspend and carry proppant particles to desired locations with the subterranean formation. As there are traditionally minimal suspending agents in high-rate water fracturing fluids, once the high-rate water flow subsides, the proppant tends to settle and form dunes of proppant particles within fractures. Illustrative examples of a duned proppant pack and an idealized homogeneous proppant pack are provided in Figures 1A-B, respectively.

Proppant settling in deviated wellbores can also be problematic because the fractures radiating from deviated wellbores tend to have angles closer to vertical where proppant particles settle either back down to the wellbore or into those fractures radiating down from the wellbore. As used herein, the term "deviated wellbore" refers to a wellbore in which any portion of the well is in excess of about 55-degrees from a vertical inclination.

Heterogeneous proppant packs, e.g., duned or settled proppant packs, may have less strength to hold open fractures than a more homogeneously disperse proppant pack. Weaker proppant packs can lead to partial to total fracture collapse, thereby reducing the access to the subterranean formation and consequently reducing hydrocarbon production. To remedy or mitigate against the weaker proppant packs, more proppant can be introduced into the fractures. However, the costs associated with transportation of the extra proppant particle to the well site and additional time for fracturing and propping operations can become excessive.

US-A-2009/0298720 discloses a method comprising the steps of injecting a first treatment fluid into a subterranean formation to create or extend one or more fractures in the formation, injecting a second treatment fluid to increase the permeability of the formation, and injecting a consolidating agent to stabilize a portion of the formation. The first treatment fluid may contain particulates.

US-A-2005/0274517 discloses a method of forming a proppant pack in a formation, the method comprising the steps of introducing an aqueous fluid containing proppant particles coated with an aqueous tackifier into the formation and activating the aqueous tackifier.

### SUMMARY OF THE INVENTION

The present invention relates to methods for enhancing the conductivity of propped fractures in subterranean formations.

An aspect of the present invention is a method comprising introducing a first treatment fluid into a wellbore extending into a subterranean formation at a pressure sufficient to create or extend at least one fracture in the subterranean formation; and introducing a second treatment fluid into the wellbore at a pressure sufficient to maintain or extend the fracture in the subterranean formation. The first treatment fluid includes at least a first aqueous base fluid and a first tackifier and causes at least a portion of a fracture face to become tacky. The second treatment fluid includes at least a second aqueous base fluid and first proppant particles. The first treatment fluid may also contain proppant particles ("second proppant particles").

The features and advantages of the present invention will be readily apparent to those skilled in the art upon a reading of the description of the preferred embodiments that follows.

### BRIEF DESCRIPTION OF THE DRAWINGS

The following figures are included to illustrate certain aspects of the present invention, and should not be viewed as exclusive embodiments. The subject matter disclosed is capable of considerable modifications, alterations, combinations, and equivalents in form and function, as will occur to those skilled in the art and having the benefit of this disclosure.
Figure 1A provides an illustration of a duned proppant pack in a subterranean fracture.
Figure 1B provides an illustration of an idealized proppant pack in a subterranean fracture.
Figures 2A-C provide SEM images parallel to the bedding planes of tackified shale after exposure to the proppant particles.
Figures 3A-C provide SEM images perpendicular to the bedding planes of tackified shale after exposure to the proppant particles.

### DETAILED DESCRIPTION

The present invention relates to methods for enhancing the conductivity of propped fractures in subterranean formations.

The methods of the present invention may, in some embodiments, advantageously provide for proppant packs with less settling, which may be especially advantageous when used in conjunction with high rate water packs and deviated wellbores. The first treatment fluid comprising a tackifier renders the fracture faces tacky. Tacky fracture faces may advantageously enable proppant particulates to stick thereto, thereby minimizing proppant settling. Introduction of a tackifier during a fracturing operation may advantageously expose more fracture faces to the tackifier, which enhances the surface area to which proppant may adhere. Further, proppant particles may in some embodiments have a coating that enhances adhesion to a tacky fracture face and/or other proppant particles. In some embodiments, proppant particles coated with a tackifier may form aggregates and/or clusters of proppant particles. As used herein, the term "coating," and the like, does not imply any particular degree of coating on a surface (*e.g*., a fracture face and/or a proppant particle). In particular, the terms "coat" or "coating" do not imply 100% coverage by the coating on a surface.

Minimizing proppant settling may advantageously provide for more homogeneous proppant packs, which may yield stronger proppant packs and proppant packs capable of producing more hydrocarbons.

While methods of the present invention may advantageously be employed in wellbores more susceptible to proppant settling, *e.g*., deviated versus vertical wellbores, it should be understood that the methods provided herein are applicable to wellbores at any angle including, but not limited to, vertical wellbores, deviated wellbores, highly deviated wellbores, horizontal wellbores, and hybrid wellbores comprising sections of any combination of the aforementioned wells. In some embodiments, a subterranean formation and wellbore may be provided with an existing fracture network. As used herein, the term "deviated wellbore" refers to a wellbore in which any portion of the well is in excess of about 55-degrees from a vertical inclination. As used herein, the term "highly deviated wellbore" refers to a wellbore that is oriented between 75-degrees and 125-degrees off-vertical.

Further, while any subterranean formation capable of being fractured and susceptible to proppant settling may be used in conjunction with the present invention, subterranean formations that may benefit from these methods may include unconventional formations, *e.g*., low-permeability tight formations, shales, sandstone, coal-bed methane wells, and the like. By way of nonlimiting example, tight formations and shales with low permeabilities can have a slow fracture closure rate, which may allow the proppant time to settle. Consequently, high flow velocities are often used to keep the proppant to suspend during pumping. Once placed inside the created fracture, low flow rate and insufficient proppant suspension capability of the carrier fluid often result in quick settling of proppant to the lower portion of the fracture. Fractures or portions of fractures not having proppant to keep them open will often close, thereby reducing access to hydrocarbons and consequently reducing well productivity.

It should be noted that when "about" is provided at the beginning of a numerical list, "about" modifies each number of the numerical list. It should be noted that in some numerical listings of ranges, some lower limits listed may be greater than some upper limits listed. One skilled in the art will recognize that the selected subset will require the selection of an upper limit in excess of the selected lower limit.

The first treatment fluid advantageously at least partially coats formation faces with tackifier to which proppant particles may stick, thereby mitigating duning in proppant packs. Generally, tackifiers or tackifying agents are compositions (*e.g*., polymers) that as liquids or in solution at the temperature of the subterranean formation and are, by themselves, non-hardening.

Suitable treatment fluids for use in conjunction with introducing tackifier resin to the subterranean formation may include, but are not limited to, fracturing fluids, high-rate water pack fluids, pre-pad fluids, and the like. As used herein, the terms "high-rate water pack" and "HRWP" refer to an operation in which particulates are injected into a cased and perforated wellbore at a rate and/or pressure that is at or near the fracture rate and/or pressure of the reservoir.

In some embodiments where a high-rate water pack is employed, the aqueous base fluid may be characterized as a low viscosity carrier fluid. The term "low-viscosity carrier fluid," as used herein, refers to a fluid having a viscosity of less than about 20 cp, preferably less than about 10 cp. By way of example, a solution of 10 pounds of guar in 1000 gallons of water is a typical low-viscosity carrier fluid.

In some embodiments, a proppant particle may be at least partially coated with a tackifier. In some embodiments, coating the proppant particle with a tackifier may enable proppant particles to adhere to each other in a proppant pack. Adhesion of proppant particles to each other, in some embodiments, may be advantageous in larger fractures where not all proppant particles will be in contact with a fracture face. It should be noted, that unless otherwise specified proppant particles discussed herein may be coated or uncoated.

In some embodiments, a proppant particle may be at least partially coated with a compound that readily binds to a tackifier on the fracture face. Coating proppant particles with such a compound may enhance, in some embodiments, the adhesion of a proppant particle to a fracture face and/or an adjacent proppant particle. Suitable compounds that readily bind to a tackifier on the fracture face may include, but are not limited to, polymers having a charge opposite of the tackifier, *e.g*., a cationic tackifier and an anionic polymer, or an anionic tackifier and a cationic polymer.

Some embodiments of the present invention may involve introducing a first treatment fluid comprising a tackifier, an aqueous base fluid, and proppant particles at a pressure sufficient to create or extend at least one fracture, and then introducing a second treatment fluid comprising coated proppant particles. Suitable proppant coatings may include, but are not limited to, tackifiers, resins, any compound that readily binds to a tackifier (*e.g*., to a tackifier on a fracture face and/or on a proppant particle), or any combination thereof.

Before performing fracturing and propping operations described herein, some embodiments may involve treating the subterranean formation. After fracturing and propping operations described herein are complete, some embodiments may involve treating the subterranean formation. Suitable treatment operations before and/or after fracturing and propping operations described herein may include, but are not limited to, lost circulation operations, stimulation operations, sand control operations, completion operations, acidizing operations, scale inhibiting operations, water-blocking operations, clay stabilizer operations, gravel packing operations, wellbore strengthening operations, sag control operations, and production operations (*e.g*., producing hydrocarbons from the wellbore). The methods and compositions of the present invention may be used in full-scale operations or pills. As used herein, a "pill" is a type of relatively small volume of specially prepared treatment fluid placed or circulated in the wellbore. By way of nonlimiting example, a formation may receive an acidizing operation prior to fracturing and propping operations described herein. By way of another nonlimiting example, a formation may receive clay stabilizing operations prior to and/or after fracturing and propping operations described herein. By way of yet another nonlimiting example, a formation may receive a scale inhibiting operation after fracturing and propping operations described herein. One skilled in the art with the benefit of this disclosure should understand the plurality of combinations of operations that may be performed before and/or after fracturing and propping operations described herein.

In some embodiments, a treatment fluid for use in conjunction with the present invention may comprise an aqueous base fluid, a tackifier, and optionally proppant particles.

Aqueous base fluids suitable for use in the treatment fluids of the present invention may comprise fresh water, saltwater (*e.g*., water containing one or more salts dissolved therein), brine (*e.g*., saturated salt water or produced water), seawater, produced water (*e.g*., water produced from a subterranean formation), aqueous-miscible fluids, or combinations thereof. Generally, the water may be from any source, provided that it does not contain components that might adversely affect the stability and/or performance of the first treatment fluids or second treatment fluids of the present invention. In certain embodiments, the density of the aqueous base fluid can be adjusted, among other purposes, to provide additional particulate transport and suspension in the treatment fluids used in the methods of the present invention. In certain embodiments, the pH of the aqueous base fluid may be adjusted (*e.g*., by a buffer or other pH adjusting agent), among other purposes, to activate a crosslinking agent and/or to reduce the viscosity of the first treatment fluid (*e.g*., activate a breaker, deactivate a crosslinking agent). In these embodiments, the pH may be adjusted to a specific level, which may depend on, among other factors, the types of gelling agents, acids, and other additives included in the treatment fluid. One of ordinary skill in the art, with the benefit of this disclosure, will recognize when such density and/or pH adjustments are appropriate.

Suitable aqueous-miscible fluids may include, but not be limited to, alcohols, *e.g*., methanol, ethanol, n-propanol, isopropanol, n-butanol, sec-butanol, isobutanol, and t-butanol; glycerins; glycols, *e.g*., polyglycols, propylene glycol, and ethylene glycol; polyglycol amines; polyols; any derivative thereof; any in combination with salts, *e.g*., sodium chloride, calcium chloride, calcium bromide, zinc bromide, potassium carbonate, sodium formate, potassium formate, cesium formate, sodium acetate, potassium acetate, calcium acetate, ammonium acetate, ammonium chloride, ammonium bromide, sodium nitrate, potassium nitrate, ammonium nitrate, ammonium sulfate, calcium nitrate, sodium carbonate, and potassium carbonate; any in combination with an aqueous-based fluid, and any combination thereof.

In some embodiments, a treatment fluid may be foamed or a wet gas. Foamed fluids and wet gases may minimize the exposure of the subterranean formation to aqueous-based fluid, which for some tight formations like shale advantageously minimize the deleterious effects water has on the fracture faces (*e.g*., clay swelling). Foamed fluids and wet gases may also, in some embodiments, be capable of suspending the small propping agents because of their size.

In some embodiments, a treatment fluid for use in conjunction with the present invention may comprise an aqueous base fluid, a tackifier, a gas, a foaming agent, and optionally proppant particles.

A suitable gas for use in conjunction with the present invention may include, but is not limited to, nitrogen, carbon dioxide, air, methane, helium, argon, and any combination thereof. One skilled in the art, with the benefit of this disclosure, should understand the benefit of each gas. By way of nonlimiting example, carbon dioxide foams may have deeper well capability than nitrogen foams because carbon dioxide emulsions have greater density than nitrogen gas foams so that the surface pumping pressure required to reach a corresponding depth is lower with carbon dioxide than with nitrogen. Moreover, the higher density may impart greater proppant transport capability, up to about 12 lb of proppant per gal of fracture fluid.

In some embodiments, the quality of the foamed treatment fluid may range from a lower limit of about 5%, 10%, 25%, 40%, 50%, 60%, or 70% gas volume to an upper limit of about 95%, 90%, 80%, 75%, 60%, or 50% gas volume, and wherein the quality of the foamed treatment fluid may range from any lower limit to any upper limit and encompass any subset therebetween. Most preferably, the foamed treatment fluid may have a foam quality from about 85% to about 95%, or about 90% to about 95%.

Suitable foaming agents for use in conjunction with the present invention may include, but are not limited to, cationic foaming agents, anionic foaming agents, amphoteric foaming agents, nonionic foaming agents, or any combination thereof. Nonlimiting examples of suitable foaming agents may include, but are not limited to, surfactants like betaines, sulfated or sulfonated alkoxylates, alkyl quarternary amines, alkoxylated linear alcohols, alkyl sulfonates, alkyl aryl sulfonates, C₁₀-C₂₀ alkyldiphenyl ether sulfonates, polyethylene glycols, ethers of alkylated phenol, sodium dodecylsulfate, alpha olefin sulfonates such as sodium dodecane sulfonate, trimethyl hexadecyl ammonium bromide, and the like, any derivative thereof, or any combination thereof. Foaming agents may be included in foamed treatment fluids at concentrations ranging typically from about 0.05% to about 2% of the liquid component by weight (*e.g*., from about 0.5 to about 20 gallons per 1000 gallons of liquid).

Suitable tackifiers for use in conjunction with the present invention may include, but are not limited to, aqueous tackifying agents, non-aqueous tackifying agents, tackifier emulsions, aggregating compositions, or any combination thereof. Aqueous tackifying agents suitable for use in the present invention are usually not generally significantly tacky when placed onto a particulate, but are capable of being "activated" (*e.g*., destabilized, coalesced and/or reacted) to transform the compound into a sticky, tackifying compound at a desirable time. Such activation may occur before, during, or after the aqueous tackifier agent is placed in the subterranean formation. In some embodiments, a pretreatment may be first contacted with the surface of a particulate to prepare it to be coated with an aqueous tackifier agent. Suitable aqueous tackifying agents are generally charged polymers that comprise compounds that, when in an aqueous solvent or solution, will form a nonhardening coating (by itself or with an activator) and, when placed on a particulate, will increase the continuous critical resuspension velocity of the particulate when contacted by a stream of water. The aqueous tackifier agent may enhance the grain-to-grain contact between the individual particulates within the formation (be they proppant particulates, formation fines, or other particulates), helping bring about the consolidation of the particulates into a cohesive, flexible, and permeable mass.

Suitable aqueous tackifying agents include any polymer that can bind, coagulate, or flocculate a particulate. Also, polymers that function as pressure-sensitive adhesives may be suitable. Examples of aqueous tackifying agents suitable for use in the present invention include, but are not limited to acrylic acid polymers; acrylic acid ester polymers; acrylic acid derivative polymers; acrylic acid homopolymers; acrylic acid ester homopolymers (such as poly(methyl acrylate), poly(butyl acrylate), and poly(2-ethylhexyl acrylate)); acrylic acid ester co-polymers; methacrylic acid derivative polymers; methacrylic acid homopolymers; methacrylic acid ester homopolymers (such as poly(methyl methacrylate), poly(butyl methacrylate), and poly(2-ethylhexyl methacrylate)); acrylamido-methyl-propane sulfonate polymers; acrylamido-methyl-propane sulfonate derivative polymers; acrylamido-methyl-propane sulfonate co-polymers; and acrylic acid/acrylamido-methyl-propane sulfonate co-polymers; derivatives thereof, and combinations thereof. Methods of determining suitable aqueous tackifying agents and additional disclosure on aqueous tackifying agents can be found in U.S. Patent Publication No. 2005/0277554 filed June 9, 2004 and U.S. Patent Publication No. 2005/0274517 filed June 9, 2004.

Some suitable tackifying agents are described in U.S. Pat. No. 5,249,627 by Harms, et al., which discloses aqueous tackifying agents that comprise at least one member selected from the group consisting of benzyl coco di-(hydroxyethyl) quaternary amine, p-T-amyl-phenol condensed with formaldehyde, and a copolymer comprising from about 80% to about 100% C1-30 alkylmethacrylate monomers and from about 0% to about 20% hydrophilic monomers. In some embodiments, the aqueous tackifying agent may comprise a copolymer that comprises from about 90% to about 99.5% 2-ethylhexylacrylate and from about 0.5% to about 10% acrylic acid. Suitable hydrophillic monomers may be any monomer that will provide polar oxygen-containing or nitrogen-containing groups. Suitable hydrophillic monomers include dialkyl amino alkyl (meth)acrylates and their quaternary addition and acid salts, acrylamide, N-(dialkyl amino alkyl) acrylamide, methacrylamides and their quaternary addition and acid salts, hydroxy alkyl (meth)acrylates, unsaturated carboxylic acids such as methacrylic acid or acrylic acid, hydroxyethyl acrylate, acrylamide, and the like. Combinations of these may be suitable as well. These copolymers can be made by any suitable emulsion polymerization technique. Methods of producing these copolymers are disclosed, for example, in U.S. Pat. No. 4,670,501 by Dymond, et al.

Additional tackifiers may include silyl-modified polyamide compounds, which may be described as substantially self-hardening compositions that are capable of at least partially adhering to particulates in the unhardened state, and that are further capable of self-hardening themselves to a substantially non-tacky state to which individual particulates such as formation fines will not adhere to, for example, in formation or proppant pack pore throats. Such silyl-modified polyamides may be based, for example, on the reaction product of a silating compound with a polyamide or a combination of polyamides. The polyamide or combination of polyamides may be one or more polyamide intermediate compounds obtained, for example, from the reaction of a polyacid (*e.g.,* diacid or higher) with a polyamine (*e.g.,* diamine or higher) to form a polyamide polymer with the elimination of water. Other suitable silyl-modified polyamides and methods of making such compounds are described in U.S. Pat. No. 6,439,309 by Matherly, et al.

In some embodiments, a tackifier for use in conjunction with the present invention may include an emulsified tackifier. The tackifier in suitable emulsions may include a non-aqueous tackifying agent. These consolidating agent emulsions have an aqueous external phase, organic-based internal phase, and an emulsifying agent.

Suitable tackifier emulsions may comprise an aqueous external phase comprising an aqueous fluid in an amount in the range of about 20% to 99.9% by weight of the tackifier emulsion composition, or more preferably about 60% to 99.9% by weight of the tackifier emulsion composition, or most preferably about 95% to 99.9% by weight of the tackifier emulsion composition.

Further, suitable tackifier emulsions may comprise a nonaqueous tackifier in an amount in the range of about 0.1% to about 80% by weight of the tackifier emulsion composition, or more preferably about 0.1% to about 40% by weight of the tackifier emulsion composition, or most preferably about 0.1% to about 5% by weight of the tackifier emulsion composition.

Suitable emulsifying agents for use in conjunction with the tackifier emulsion composition may include, but are not limited to, surfactants, proteins, hydrolyzed proteins, lipids, glycolipids, nanosized particulates (*e.g*., fumed silica), or any combination thereof.

Suitable non-aqueous tackifying agents may include, but are not limited to, polyamides that are liquids or in solution at the temperature of the subterranean formation such that they are, by themselves, non-hardening when introduced into the subterranean formation; the product of a condensation reaction of a commercially available polyamine and polyacid (*e.g*., dibasic acids containing some trimer and higher oligomers, small amounts of monomer acids, trimer acids, synthetic acids produced from fatty acids, maleic anhydride, acrylic acid, and the like, or any combination thereof). Additional compounds which may be used as non-aqueous tackifying agents include liquids and solutions of, for example, polyesters, polycarbonates, silyl-modified polyamide compounds, polycarbamates, urethanes, natural resins such as shellac, and the like. Combinations of any of the aforementioned non-aqueous tackifiers may be suitable as well.

Additional details of tackifier emulsions may be found in U.S. Patent No. 7,819,192 by Weaver, et al.

In some embodiments, the tackifiers may comprise an aggregating composition which can modify the zeta potential or aggregation potential of a particulate. Such modifications can permit any two surfaces (*e.g*., of particulates, of a particulate and a substrate, etc.) to have a greater attraction for one another.

Aggregating compositions suitable for use in the present invention include, but are not limited to, a reaction product of an amine and a phosphate ester, where the aggregating composition is designed to coat a surface with the reaction product to change the zeta potential or aggregation potential of the surface. Suitable aggregating compositions and their methods of use can be found in U.S. Patent No. 7,392,847 by Gatlin, et al., and U.S. Patent No. 7,956,017 by Gatlin, et al.

Proppant particulates suitable for use in the present invention may comprise any material suitable for use in subterranean operations. Suitable materials for these proppant particulates include, but are not limited to, sand, bauxite, ceramic materials, glass materials, polymer materials, polytetrafluoroethylene materials, nut shell pieces, cured resinous particulates comprising nut shell pieces, seed shell pieces, cured resinous particulates comprising seed shell pieces, fruit pit pieces, cured resinous particulates comprising fruit pit pieces, wood, composite particulates, and combinations thereof. Suitable composite particulates may comprise a binder and a filler material wherein suitable filler materials include silica, alumina, fumed carbon, carbon black, graphite, mica, titanium dioxide, barite, meta-silicate, calcium silicate, kaolin, talc, zirconia, boron, fly ash, hollow glass microspheres, solid glass, and combinations thereof. Suitable proppant particles for use in conjunction with the present invention may be any known shape of material, including substantially spherical materials, fibrous materials, polygonal materials (such as cubic materials), and combinations thereof. Moreover, fibrous materials, that may or may not be used to bear the pressure of a closed fracture, may be included in certain embodiments of the present invention.

In some embodiments, proppant particles may be present in a treatment fluid for use in the present invention in an amount in the range of from about 0.1 pounds per gallon ("ppg") to about 15 ppg by volume of the treatment fluid.

In some embodiments, proppant particles may comprise degradable materials. Degradable materials may include, but not be limited to, dissolvable materials, materials that deform or melt upon heating such as thermoplastic materials, hydrolytically degradable materials, materials degradable by exposure to radiation, materials reactive to acidic fluids, or any combination thereof. In some embodiments, degradable materials may be degraded by temperature, presence of moisture, oxygen, microorganisms, enzymes, pH, free radicals, and the like. In some embodiments, degradation may be initiated in a subsequent treatment fluid introduced into the subterranean formation at some time when diverting is no longer necessary. In some embodiments, degradation may be initiated by a delayed-release acid, such as an acid-releasing degradable material or an encapsulated acid, and this may be included in the treatment fluid comprising the degradable material so as to reduce the pH of the treatment fluid at a desired time, for example, after introduction of the treatment fluid into the subterranean formation.

In choosing the appropriate degradable material, one should consider the degradation products that will result. Also, these degradation products should not adversely affect other operations or components. For example, a boric acid derivative may not be included as a degradable material in the well drill-in and servicing fluids of the present invention where such fluids use guar as the viscosifier, because boric acid and guar are generally incompatible. One of ordinary skill in the art, with the benefit of this disclosure, will be able to recognize when potential components of a treatment fluid of the present invention would be incompatible or would produce degradation products that would adversely affect other operations or components.

The degradability of a degradable polymer often depends, at least in part, on its backbone structure. For instance, the presence of hydrolyzable and/or oxidizable linkages in the backbone often yields a material that will degrade as described herein. The rates at which such polymers degrade are dependent on the type of repetitive unit, composition, sequence, length, molecular geometry, molecular weight, morphology (*e.g*., crystallinity, size of spherulites, and orientation), hydrophilicity, hydrophobicity, surface area, and additives. Also, the environment to which the polymer is subjected may affect how it degrades, *e.g*., temperature, presence of moisture, oxygen, microorganisms, enzymes, pH, and the like.

Suitable examples of degradable polymers for a solid particulate of the present invention that may be used include, but are not limited to, polysaccharides such as cellulose; chitin; chitosan; and proteins. Suitable examples of degradable polymers that may be used in accordance with the present invention include, but are not limited to, those described in the publication of Advances in Polymer Science, Vol. 157 entitled "Degradable Aliphatic Polyesters," edited by A. C. Albertsson, pages 1-138. Specific examples include homopolymers, random, block, graft, and star- and hyper-branched aliphatic polyesters. Such suitable polymers may be prepared by polycondensation reactions, ring-opening polymerizations, free radical polymerizations, anionic polymerizations, carbocationic polymerizations, coordinative ring-opening polymerizations, as well as by any other suitable process. Examples of suitable degradable polymers that may be used in conjunction with the methods of this invention include, but are not limited to, aliphatic polyesters; poly(lactides); poly(glycolides); poly(ε-caprolactones); poly(hydroxy ester ethers); poly(hydroxybutyrates); poly(anhydrides); polycarbonates; poly(orthoesters); poly(amino acids); poly(ethylene oxides); poly(phosphazenes); poly(ether esters), polyester amides, polyamides, and copolymers or blends of any of these degradable polymers, and derivatives of these degradable polymers. The term "copolymer" as used herein is not limited to the combination of two polymers, but includes any combination of polymers, *e.g*., terpolymers and the like. As referred to herein, the term "derivative" is defined herein to include any compound that is made from one of the listed compounds, for example, by replacing one atom in the base compound with another atom or group of atoms. Of these suitable polymers, aliphatic polyesters such as poly(lactic acid), poly(anhydrides), poly(orthoesters), and poly(lactide)-co-poly(glycolide) copolymers are preferred. Poly(lactic acid) is especially preferred. Poly(orthoesters) also may be preferred. Other degradable polymers that are subject to hydrolytic degradation also may be suitable. The choice may depend on the particular application and the conditions involved. Other guidelines to consider include the degradation products that result, the time required for the requisite degree of degradation, and the desired result of the degradation (*e.g*., voids).

Aliphatic polyesters degrade chemically, *inter alia,* by hydrolytic cleavage. Hydrolysis can be catalyzed by either acids or bases. Generally, during the hydrolysis, carboxylic end groups may be formed during chain scission, which may enhance the rate of further hydrolysis. This mechanism is known in the art as "autocatalysis," and is thought to make polyester matrices more bulkeroding.

Suitable aliphatic polyesters have the general formula of repeating units shown below: 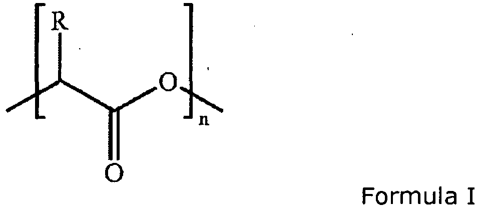 where n is an integer between 75 and 10,000 and R is selected from the group consisting of hydrogen, alkyl, aryl, alkylaryl, acetyl, heteroatoms, and mixtures thereof. In certain embodiments of the present invention wherein an aliphatic polyester is used, the aliphatic polyester may be poly(lactide). Poly(lactide) is synthesized either from lactic acid by a condensation reaction or, more commonly, by ring-opening polymerization of cyclic lactide monomer. Since both lactic acid and lactide can achieve the same repeating unit, the general term poly(lactic acid) as used herein refers to writ of Formula I without any limitation as to how the polymer was made (*e.g*., from lactides, lactic acid, or oligomers), and without reference to the degree of polymerization or level of plasticization.

The lactide monomer exists generally in three different forms: two stereoisomers (L- and D-lactide) and racemic D,L-lactide (meso-lactide). The oligomers of lactic acid and the oligomers of lactide are defined by the following formula: 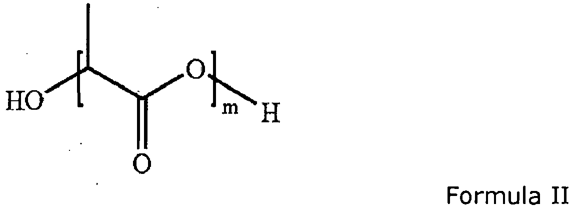 where m is an integer in the range of from greater than or equal to about 2 to less than or equal to about 75. In certain embodiments, m may be an integer in the range of from greater than or equal to about 2 to less than or equal to about 10. These limits may correspond to number average molecular weights below about 5,400 and below about 720, respectively. The chirality of the lactide units provides a means to adjust, *inter alia,* degradation rates, as well as physical and mechanical properties. Poly(L-lactide), for instance, is a semicrystalline polymer with a relatively slow hydrolysis rate. This could be desirable in applications of the present invention in which a slower degradation of the degradable material is desired. Poly(D,L-lactide) may be a more amorphous polymer with a resultant faster hydrolysis rate. This may be suitable for other applications in which a more rapid degradation may be appropriate. The stereoisomers of lactic acid may be used individually, or may be combined in accordance with the present invention. Additionally, they may be copolymerized with, for example, glycolide or other monomers like ε-caprolactone, 1,5-dioxepan-2-one, trimethylene carbonate, or other suitable monomers to obtain polymers with different properties or degradation times. Additionally, the lactic acid stereoisomers can be modified by blending high and low molecular weight polylactide or by blending polylactide with other polyesters. In embodiments wherein polylactide is used as the degradable material, certain preferred embodiments employ a mixture of the D and L stereoisomers, designed so as to provide a desired degradation time and/or rate. Examples of suitable sources of degradable material are commercially available as 6250D^{™} (poly(lactic acid), available from Cargill Dow) and 5639A^{™} (poly(lactic acid), available from Cargill Dow).

Aliphatic polyesters useful in the present invention may be prepared by substantially any of the conventionally known manufacturing methods such as those described in U.S. Patent Nos. 2,703,316 by Schneider; 3,912,692 by Casey, et al.; 4,387,769 by Erbstoesser, et al.; 5,216,050 by Sinclair; and 6,323,307 by Bigg, et al.

Polyanhydrides are another type of degradable polymer that may be suitable for use in the present invention. Polyanhydride hydrolysis proceeds, *inter alia,* via free carboxylic acid chain-ends to yield carboxylic acids as final degradation products. Their erosion time can be varied over a broad range of changes in the polymer backbone. Examples of suitable polyanhydrides include poly(adipic anhydride), poly(suberic anhydride), poly(sebacic anhydride), and poly(dodecanedioic anhydride). Other suitable examples include, but are not limited to, poly(maleic anhydride) and poly(benzoic anhydride).

The physical properties of degradable polymers may depend on several factors including, but not limited to, the composition of the repeat units, flexibility of the chain, presence of polar groups, molecular mass, degree of branching, crystallinity, and orientation. For example, short chain branches may reduce the degree of crystallinity of polymers while long chain branches may lower the melt viscosity and may impart, *inter alia,* extensional viscosity with tension-stiffening behavior. The properties of the material utilized further may be tailored by blending, and copolymerizing it with another polymer, or by a change in the macromolecular architecture (*e.g*., hyper-branched polymers, star-shaped, or dendrimers, and the like). The properties of any such suitable degradable polymers (*e.g*., hydrophobicity, hydrophilicity, rate of degradation, and the like) can be tailored by introducing select functional groups along the polymer chains. For example, poly(phenyllactide) will degrade at about one-fifth of the rate of racemic poly(lactide) at a pH of 7.4 at 55°C. One of ordinary skill in the art, with the benefit of this disclosure, will be able to determine the appropriate functional groups to introduce to the polymer chains to achieve the desired physical properties of the degradable polymers.

Suitable dehydrated compounds for use as solid particulates in the present invention may degrade over time as they are rehydrated. For example, a particulate solid anhydrous borate material that degrades over time may be suitable for use in the present invention. Specific examples of particulate solid anhydrous borate materials that may be used include, but are not limited to, anhydrous sodium tetraborate (also known as anhydrous borax) and anhydrous boric acid.

Whichever degradable material is used in the present invention, the degradable material may have any shape, including, but not limited to, particles having the physical shape of platelets, shavings, flakes, ribbons, rods, strips, spheroids, toroids, pellets, tablets, or any other physical shape. In certain embodiments of the present invention, the degradable material used may comprise a mixture of fibers and spherical particles. One of ordinary skill in the art, with the benefit of this disclosure, will recognize the specific degradable material that may be used in accordance with the present invention, and the preferred size and shape for a given application.

In choosing the appropriate degradable material, one should consider the degradation products that will result, and choose a degradable material that will not yield degradation products that would adversely affect other operations or components utilized in that particular application. The choice of degradable material also may depend, at least in part, on the conditions of the well (*e.g*., wellbore temperature). For instance, lactides have been found to be suitable for lower temperature wells, including those within the range of 60°F to 150°F, and polylactides have been found to be suitable for wellbore temperatures above this range.

In some embodiments, a treatment fluid for use in the present invention may further comprise an additive including, but not limited to, fibers, salts, weighting agents, inert solids, fluid loss control agents, emulsifiers, dispersion aids, corrosion inhibitors, emulsion thinners, emulsion thickeners, viscosifying agents, surfactants, particulates, lost circulation materials, foaming agents, gases, pH control additives, breakers, biocides, crosslinkers, stabilizers, chelating agents, scale inhibitors, mutual solvents, oxidizers, reducers, friction reducers, clay stabilizing agents, and any combination thereof.

By way of nonlimiting example, a treatment fluid may comprise an aqueous base fluid, a tackifier, a proppant particle, and a fiber. By way of another nonlimiting example, some embodiments may involve sequentially introducing a first treatment fluid and a second treatment fluid, wherein the first treatment fluid may comprise an aqueous base fluid and a tackifier and the second treatment fluid may comprise an aqueous base fluid, a proppant particle, a fiber, and optionally a second tackifier.

Suitable fibers for use in conjunction with the present invention may include, but are not limited to, natural organic fibers, synthetic organic fibers, inorganic fibers, glass fibers, carbon fibers, ceramic fibers, metal fibers, or any combination thereof. Suitable fibers for use in conjunction with the present invention may have an average length ranging from about 0.33 inches to about 1 inch and have diameters ranging from about 10 microns to about 1,000 microns. Further, fibers for use in conjunction with the present invention may be bundles of about 5 to about 200 individual fibers.

To facilitate a better understanding of the present invention, the following examples of preferred or representative embodiments are given. In no way should the following examples be read to limit, or to define, the scope of the invention.

### EXAMPLES

*Example 1:* A treatment solution was prepared by diluting 5% v/v of aqueous-based SANDWEDGE^{®} ABC and fresh water containing 2% v/v CLA-WEB^{®} clay stabilizer.

A shale sample was immersed in a stirred beaker of the treatment solution for 5 minutes, which simulates the exposure of fracture faces to a treatment fluid comprising a tackifier as described herein. The shale sample was removed and immersed in a beaker of tap water containing 0.2% v/v CLA-WEB^{®} clay stabilizer and 5% w/v OK#1 sand (proppant). This suspension was stirred enough to cause the proppant particles to circulate, which stimulates the introduction of proppant particles into a tackifier treated formation. The shale sample was removed for SEM imaging.

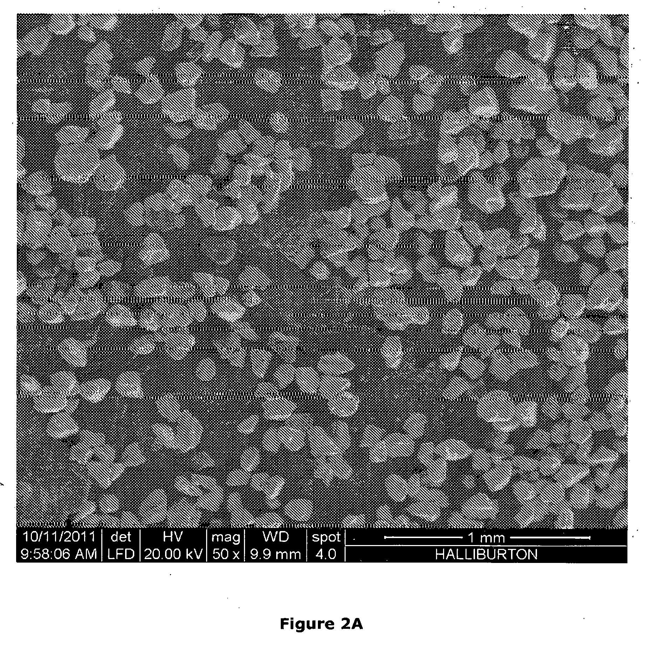

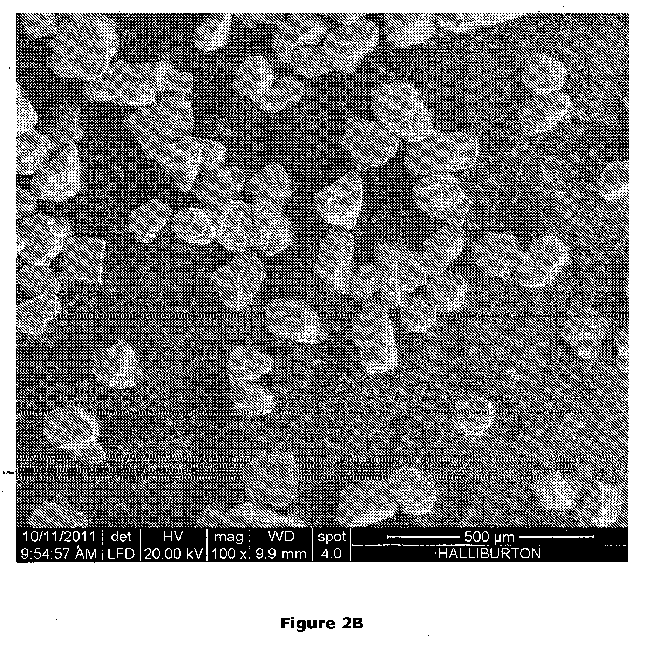

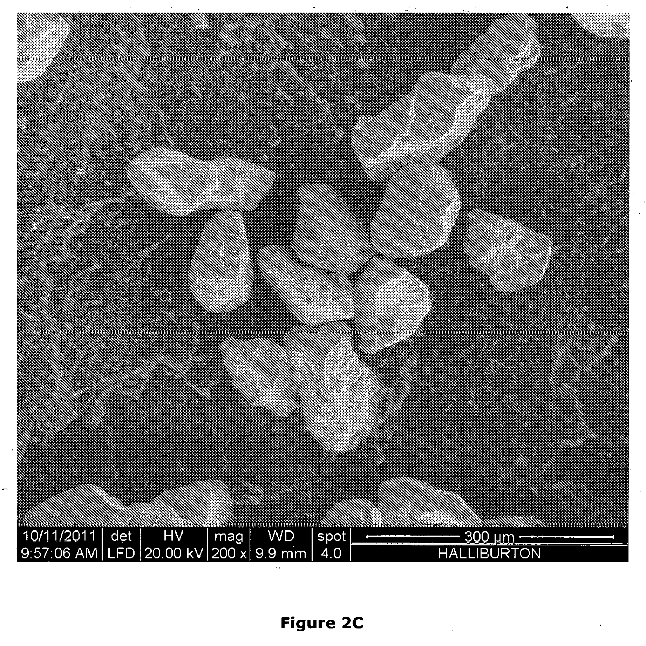

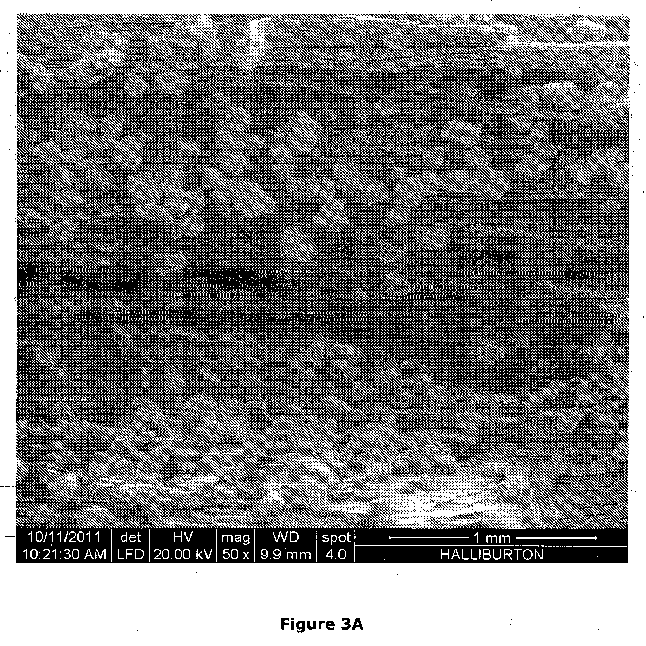

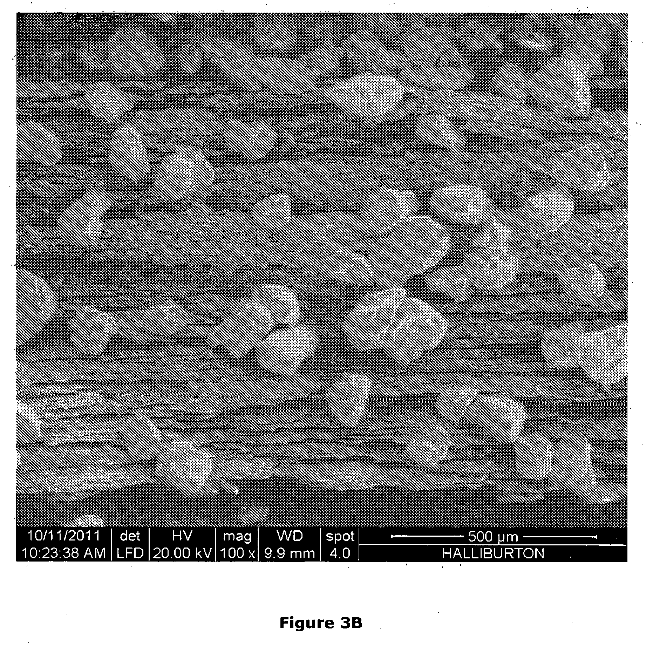

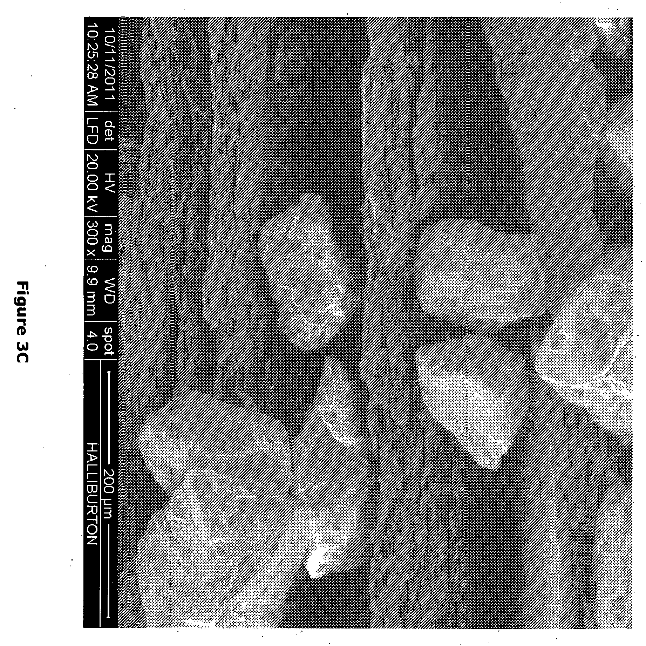

Figures 2A-C provide SEM images parallel to the bedding planes of the shale after exposure to the proppant particles. Specifically, Figures 2A-C show, at increasing magnification respectively, the adhesion of proppant particles to the surface of the bedding planes. Figures 3A-C provide SEM images perpendicular to the bedding planes of the shale after exposure to the proppant particles. Specifically, Figures 3A-C show, at increasing magnifications respectively, the adhesion of larger proppant particles to the sides of the bedding planes without, in some instances, support from a lower bedding plane. Further, some of the smaller proppant particles are between bedding planes and appear to be adhered, in some instances, to the upper bedding plane. These figures demonstrate that the tackifier enables adhesion of the proppant particles to subterranean fracture faces including between the layers (*i.e*., bedding planes) of the formation, as best illustrated in Figure 3C.

Therefore, the present invention is well adapted to attain the ends and advantages mentioned as well as those that are inherent therein. While compositions and methods are described in terms of "comprising," "containing," or "including" various components or steps, the compositions and methods can also "consist essentially of" or "consist of" the various components and steps. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces. If there is any conflict in the usages of a word or term in this specification and one or more referenced patent or other documents, the definitions that are consistent with this specification should be adopted.

## Claims

1. A method comprising:
introducing a first treatment fluid into a wellbore extending into a subterranean formation at a pressure sufficient to create or extend at least one fracture in the subterranean formation, wherein the first treatment fluid comprises a first aqueous base fluid and a first tackifier, and wherein the first treatment fluid causes at least a portion of a fracture face to become tacky; and
after the first treatment fluid causes at least a portion of a fracture face to become tacky, introducing a second treatment fluid into the wellbore at a pressure sufficient to maintain or extend the fracture in the subterranean formation, wherein the second treatment fluid comprises a second aqueous base fluid and first proppant particles.

2. The method of Claim 1, wherein the first treatment fluid further comprises second proppant particles.

3. The method of Claim 2, wherein the first proppant particles, the second proppant particles or both comprise a coating, wherein the coating comprises at least one of the first tackifier, a second tackifier, and a compound capable of binding to the first tackifier.

4. The method of Claim 2 or Claim 3, wherein the first proppant particles, the second proppant particles or both are degradable.

5. The method of any preceding claim, wherein the second treatment fluid further comprises a second tackifier.

6. The method of Claim 5, wherein the first tackifier and the second tackifier are the same compound but are included at different concentrations in the first treatment fluid and the second treatment fluid.

7. The method of any preceding claim, wherein the second treatment fluid further comprises a fiber.

8. The method of any preceding claim, wherein the first treatment fluid further comprises a fiber.

9. The method of any preceding claim, wherein the first proppant particles are coated with a second tackifier and form proppant aggregates or clusters.

10. The method of any preceding claim, wherein at least a portion of the wellbore is at an angle in excess of 55° from a vertical inclination.

11. The method of any preceding claim, further comprising the step of producing hydrocarbons from the subterranean formation.

## Patentansprüche

1. Verfahren, umfassend:
das Einführen eines ersten Behandlungsfluids in ein Bohrloch, das sich in eine unterirdische Formation erstreckt, bei einem Druck, der ausreichend ist, um mindestens einen Bruch in der unterirdischen Formation zu schaffen oder zu erweitern, wobei das erste Behandlungsfluid ein erstes wässriges Basisfluid und einen ersten Klebrigmacher umfasst und wobei das erste Behandlungsfluid bewirkt, dass mindestens ein Teil einer Bruchfläche klebrig wird; und
nachdem das erste Behandlungsfluid bewirkt hat, dass mindestens ein Teil einer Bruchfläche klebrig wird, das Einführen eines zweiten Behandlungsfluid in das Bohrloch bei einem Druck, der ausreichend ist, den Bruch in der unterirdischen Formation zu erhalten oder zu erweitern, wobei das zweite Behandlungsfluid ein zweites wässriges Basisfluid und erste Stützmittelpartikel umfasst.

2. Verfahren gemäß Anspruch 1, bei dem das erste Behandlungsfluid zusätzlich zweite Stützmittelpartikel umfasst.

3. Verfahren gemäß Anspruch 2, bei dem die ersten Stützmittelpartikel, die zweiten Stützmittelpartikel oder beide eine Beschichtung umfassen, wobei die Beschichtung mindestens einen Vertreter von dem ersten Klebrigmacher, einem zweiten Klebrigmacher und einer Verbindung, die in der Lage ist, an den ersten Klebrigmacher zu binden, umfasst.

4. Verfahren gemäß Anspruch 2 oder Anspruch 3, bei dem die ersten Stützmittelpartikel, die zweiten Stützmittelpartikel oder beide abbaubar sind.

5. Verfahren gemäß einem der vorangehenden Ansprüche, bei dem das zweite Behandlungsfluid zusätzlich einen zweiten Klebrigmacher umfasst.

6. Verfahren gemäß Anspruch 5, bei dem der erste Klebrigmacher und der zweite Klebrigmacher dieselbe Verbindung sind, aber zu unterschiedlichen Konzentrationen in dem ersten Behandlungsfluid und dem zweiten Behandlungsfluid enthalten sind.

7. Verfahren gemäß einem der vorangehenden Ansprüche, bei dem das zweite Behandlungsfluid zusätzlich eine Faser umfasst.

8. Verfahren gemäß einem der vorangehenden Ansprüche, bei dem das erste Behandlungsfluid zusätzlich eine Faser umfasst.

9. Verfahren gemäß einem der vorangehenden Ansprüche, bei dem die ersten Stützmittelpartikel mit einem zweiten Klebrigmacher beschichtet sind und Stützmittelaggregate oder Stützmittelcluster bilden.

10. Verfahren gemäß einem der vorangehenden Ansprüche, bei dem mindestens ein Teil des Bohrlochs in einem Winkel von mehr als 55° zu einer vertikalen Neigung vorliegt.

11. Verfahren gemäß einem der vorangehenden Ansprüche, zusätzlich umfassend den Schritt des Förderns von Kohlenwasserstoffen aus der unterirdischen Formation.

## Revendications

1. Procédé comprenant :
l'introduction d'un premier fluide de traitement dans un puits de forage s'étendant dans une formation souterraine à une pression suffisante pour créer ou prolonger au moins une fracture dans la formation souterraine, dans lequel le premier fluide de traitement comprend un premier fluide de base aqueux et un premier agent poisseux, et dans lequel le premier fluide de traitement amène au moins une partie d'une face de fracture à devenir poisseuse ; et
après que le premier fluide de traitement ayant amené au moins une partie d'une face de fracture à devenir poisseuse, l'introduction d'un second fluide de traitement dans le puits de forage à une pression suffisante pour maintenir ou prolonger la fracture dans la formation souterraine, dans lequel le second fluide de traitement comprend un second fluide de base aqueux et des premières particules d'agent de soutènement.

2. Procédé selon la revendication 1, dans lequel le premier fluide de traitement comprend en outre des secondes particules d'agent de soutènement.

3. Procédé selon la revendication 2, dans lequel les premières particules d'agent de soutènement, les secondes particules d'agent de soutènement ou les deux comprennent un revêtement, dans lequel le revêtement comprend au moins un du premier agent poisseux, d'un second agent poisseux et d'un composé susceptible de se lier au premier agent poisseux.

4. Procédé selon la revendication 2 ou la revendication 3, dans lequel les premières particules d'agent de soutènement, les secondes particules d'agent de soutènement ou les deux sont dégradables.

5. Procédé selon l'une quelconque des revendications précédentes, dans lequel le second fluide de traitement comprend en outre un second agent poisseux.

6. Procédé selon la revendication 5, dans lequel le premier agent poisseux et le second agent poisseux sont le même composé, mais sont inclus à des concentrations différentes dans le premier fluide de traitement et le second fluide de traitement.

7. Procédé selon l'une quelconque des revendications précédentes, dans lequel le second fluide de traitement comprend en outre une fibre.

8. Procédé selon l'une quelconque des revendications précédentes, dans lequel le premier fluide de traitement comprend en outre une fibre.

9. Procédé selon l'une quelconque des revendications précédentes, dans lequel les premières particules d'agent de soutènement sont revêtues d'un second agent poisseux et forment des agrégats ou des groupes d'agent de soutènement.

10. Procédé selon l'une quelconque des revendications précédentes, dans lequel au moins une partie du puits de forage est à un angle dépassant 55° par rapport à une inclinaison verticale.

11. Procédé selon l'une quelconque des revendications précédentes, comprenant en outre l'étape de production d'hydrocarbures en provenance de la formation souterraine.
